# EUROPÄISCHE PATENTANMELDUNG

(11) **EP 1 571 691 A2**
(43) Veröffentlichungstag der Anmeldung: **07.09.2005**
(21) Anmeldenummer: 05100679.9
(22) Anmeldetag: 01.02.2005
(51) Int. Cl.: H01J 37/30

(54) **Punktquelle für Elektronen-Feldemissionen mit lokaler Abschirmung**

(30) Priorität: 05.03.2004 DE 102004012520
(71) Anmelder: Leibniz-Institut für Festkörper- und Werkstoffforschung Dresden e.V., 01069 Dresden (DE)
(72) Erfinder: Mühl, Thomas, Dr., 01159, Dresden (DE); Eschrig, Helmut, Prof., 01219, Dresden (DE)
(74) Vertreter: Rauschenbach, Marion

(57) **Zusammenfassung**

Die Erfindung bezieht sich auf das Gebiet der Messtechnik und betrifft eine Punktquelle für analytische und abbildende Verfahren.

Aufgabe der Erfindung ist es, eine Punktquelle anzugeben, welche den Sekundärelektronen einen möglichst ungestörten Weg von der Probe bis zu verschiedensten Elektronendetektoren erlaubt.

Die Aufgabe wird gelöst durch eine Punktquelle, bei der die Mantelfläche der Elektrode mindestens im Bereich der Spitze mit mindestens einer elektrisch isolierenden und darüber mit mindestens einer elektrisch leitfähigen Schicht versehen ist, wobei die Schichten im Bereich des geringsten Krümmungsradius der Elektrode eine Unterbrechung aufweisen oder dieser Bereich von mindestens der elektrisch isolierenden Schicht bedeckt ist, wobei jede der abwechselnd elektrisch isolierenden und leitenden Schichten in diesem Bereich eine maximale Dicke von 15 nm aufweist und die maximale Dicke aller Schichten eine Elektronenemission gewährleistet und weiterhin keine Verbindung zwischen der elektronenemittierenden Elektrode und der oder den elektrisch leitfähigen Schichten realisiert ist.

## Beschreibung

Die Erfindung bezieht sich auf das Gebiet der Messtechnik, speziell der physikalischen Analytik und betrifft eine Punktquelle für Elektronen-Feldemissionen mit lokaler Abschirmung für analytische und abbildende Verfahren.

Bei der Rastertunnelmikroskopie (Scanning Tunneling Microscopy (STM)) wird eine atomar feine metallische Spitze in einem sehr geringen Abstand über eine leitfähige Probe geführt. Zwischen der Spitze und der Probe fließt dabei ein Tunnelstrom, dessen starke Abhängigkeit von der Distanz zwischen der Spitze und der Probe zur Abstandsregelung oder direkt zur Abbildung mit atomarer Auflösung benutzt wird.
Im Gegensatz zum Rastertunnelmikroskop werden beim Rasterelektronenmikroskop die Wechselwirkungen des durch eine makroskopische Elektronenoptik rasternd über die Probe geführten Elektronenstrahles mit der Probe zur Analyse und Abbildung derselben benutzt. Meist werden die durch den Primärelektronenstrahl in der Probe erzeugten rückgestreuten oder Sekundär-Elektronen mittels unterschiedlichster Detektoren erfasst und ausgewertet (Ludwig Reimer, Scanning Electron Microscopy, Springer-Verlag Berlin Heidelberg, 1985). Beispielsweise kann durch Detektion der Spinpolarisation der Sekundärelektronen auf die räumliche Magnetisierungsverteilung in der Probe geschlossen werden. Die Ortsauflösung der Rasterelektronenmikroskopie ist jedoch wesentlich geringer als bei der Rastertunnelmikroskopie. Außerdem kann ein Rasterelektronenmikroskop nicht mit Elektronenenergien im unteren Elektronenvolt-Bereich betrieben werden, wie es für die Untersuchung der obersten Atomlagen von Probenoberflächen wünschenswert ist.
Somit liegt die Anwendung der räumlich sehr gut fokussierten Injektion niederenergetischer Elektronen in die zu untersuchende Probe mittels Rastertunnelmikroskopie (im Tunnel- oder Feldemissionsmodus) in Verbindung mit den vielfältigen Analysemethoden von Sekundärelektronen, wie sie im Zusammenhang mit der Rasterelektronenmikroskopie bekannt sind, nahe. Diese wünschenswerte Kombination wurde in der Literatur schon vor mehr als 10 Jahren diskutiert. In einer Arbeit von Allenspach (R. Allenspach und A. Bischof, Appl. Phys. Lett. 54, 587 (1989)) wurden feldemittierte Elektronen aus einer STM-Spitze auf eine ferromagnetische Probe geleitet; die dabei aus der Probe herausgelösten Sekundärelektronen wurden dann mit einem spinpolarisationsempfindlichen Detektor analysiert. Allerdings wirkt das elektrische Feld zwischen der Feldemissionsspitze (der STM-Spitze) und der Probe auch auf die aus der Probe herausgelösten Sekundärelektronen, so dass insbesondere Sekundärelektronen mit der geringsten Energie mit einer großen Wahrscheinlichkeit wieder zur Probe beschleunigt werden, bevor sie den Detektor erreichen können. Von Allenspach wurde dieses Problem beschrieben; es wurde experimentell umgangen, indem die STM-Spitze mit einem sehr großem Abstand von der Probe von 1 mm mit relativ hohen Spannungen zur Feldemission angeregt wurde. Dieser große Abstand jedoch erlaubt keine laterale Auflösung im Mikrometer- oder Nanometerbereich. Obwohl die Feldkonzentration in der Nähe der STM-Spitze den Effekt der Ablenkung der von der Probe emittierten Sekundärelektronen etwas mindert, bleibt dennoch ein über makroskopische Entfernungen wirkender Einfluß des elektrostatischen Spitze-Probe-Feldes (siehe auch B. J. Eves et al., Appl. Phys. Lett. 77, 4223 (2000)).

Ein experimenteller Ansatz zur Verminderung des Feldeinflusses auf die von der Probe emittierten Sekundärelektronen wurde von Mizuno vorgestellt (S. Mizuno et al., Surf. Sci. 514, 291 (2002)). In dieser Arbeit wurde ein elektrisch leitfähiger Tubus auf der feldemittierenden STM-Spitze befestigt. Der Durchmesser dieses Hohlzylinders liegt bei etwa einem Millimeter. Während dieser leitfähige Tubus elektrostatische Felder fern der Spitzen-Proben-Region abschirmen kann, bleibt die Ablenkung der Sekundärelektronen auf den ersten 500 µm ihres Weges bestehen.

Aufgabe der Erfindung ist es daher, eine elektrostatische Abschirmung für eine Punktquelle für Elektronen-Feldemissionen anzugeben, welche den Sekundärelektronen einen möglichst ungestörten Weg von der Probe bis zu verschiedensten Elektronendetektoren erlaubt.

Bei der erfindungsgemäßen Punktquelle für Elektronen-Feldemissionen ist die Mantelfläche der elektronenemittierenden Elektrode mindestens im Bereich der Spitze mit mindestens einer elektrisch isolierenden Schicht und darüber mit mindestens einer elektrisch leitfähigen Schicht versehen, wobei die Schichten im Bereich des geringsten Krümmungsradius der elektronenemittierenden Elektrode eine Unterbrechung aufweisen oder dieser Bereich von mindestens der elektrisch isolierenden Schicht bedeckt ist, wobei jede der abwechselnd elektrisch isolierenden und leitenden Schichten eine maximale Dicke von 15 nm in diesem Bereich aufweist und die maximale Dicke aller Schichten in diesem Bereich in Abhängigkeit von der jeweiligen Elektronenenergie eine Elektronenemission gewährleistet und weiterhin keine elektrische Verbindung zwischen der elektronenemittierenden Elektrode und der oder den elektrisch leitfähigen Schichten realisiert ist.

Vorteilhafterweise sind die Schichten strukturierte Dünnschichten mit Schichtdicken zwischen 2 nm und 100 nm.

Ebenfalls vorteilhafterweise liegt die elektrisch leitende Schicht auf dem gleichen elektrischen Potential wie die Probe.

Weiterhin vorteilhafterweise sind alternierend auf der Mantelfläche der Punktquelle elektrisch isolierende und elektrisch leitfähige Schichten aufgebracht.

Es ist auch von Vorteil, wenn das Material der äußersten elektrisch leitfähigen Schicht auf dem gleichen elektrischen Potential liegt, wie das des Probenmaterials.

Von Vorteil ist es auch, wenn mindestens eine der elektrisch leitfähigen Schichten auf einem negativen elektrischen Potential liegt, welches das negative Potential der elektronenemittierenden Elektrode übersteigt.

Ebenfalls von Vorteil ist es, wenn mindestens eine der elektrisch leitfähigen Schichten aus einem Material mit einer höheren Austrittsarbeit als die der elektronenemittierenden Elektrode besteht.

Weiterhin ist es vorteilhaft, wenn der Bereich des geringsten Krümmungsradius der elektronenemittierenden Elektrode eine laterale Ausdehnung von 1 Nanometer bis 10 µm aufweist.

Ebenfalls vorteilhaft ist es, wenn die gesamte Mantelfläche der elektronenemittierenden Elektrode mit den alternierenden elektrisch isolierenden und elektrisch leitfähigen Schichten bedeckt ist.

Es ist auch vorteilhaft, wenn durch die Wahl der elektrischen Potentiale der Schichten auf der Mantelfläche eine Fokussierung des emittierten Elektronenstrahles realisiert ist. Zu diesem Zweck wird eine der inneren leitfähigen Schichten auf ein negatives Potential gelegt, welches das negative Potential der elektronenemittierender Elektrode übersteigt.

Eine weitere vorteilhafte Ausgestaltung der Erfindung besteht darin, dass einzelne, mehrere oder alle elektrisch isolierenden und elektrisch leitfähigen Schichten in Segmente unterteilt sind, wobei die Größe der elektrischen Potentiale an den einzelnen Schichtsegmenten zur Einstellung und Variation des Elektronenemissionswinkels dient und die Einstellung und Variation des Elektronenemissionswinkels innerhalb eines ein- oder zweidimensionalen Rasters realisiert ist.

Von Vorteil ist auch, wenn eine elektrisch leitfähige Schicht ein elektrisches Potential aufweist, mit dem eine Abstandsregelung zur Probe durch Auswertung des Tunnelstromes realisiert ist.

Ebenfalls von Vorteil ist, wenn mindestens eine der elektrisch leitfähigen Schichten als Detektor oder Kollektor für sekundäre Elektronen dient.

Und weiterhin vorteilhafterweise bestehen die isolierenden Schichten aus Oxiden und die elektrisch leitfähigen Schichten aus Metallen.

Auch von Vorteil ist es, wenn die elektronenemittierende Spitze möglichst kegelförmig ausgebildet oder eine Kohlenstoff-Nanoröhre ist.

Eine weitere vorteilhafte Ausgestaltung der Erfindung besteht darin, dass einzelne, mehrere oder alle elektrisch isolierenden und elektrisch leitfähigen Schichten im Bereich des geringsten Krümmungsradius der elektronenemittierenden Elektrode jeweils eine maximale Dicke von ≤ 10 nm aufweisen.

Von Vorteil ist es auch, wenn einzelne, mehrere oder alle elektrisch isolierenden und elektrisch leitfähigen Schichten im Bereich des geringsten Krümmungsradius der elektronenemittierenden Elektrode im Zentrum des Bereiches mit dem geringsten Krümmungsradius eine minimale Schichtdicke aufweisen und die Schichtdicken dieser Schichten in einer oder mehreren Raumrichtungen diskontinuierlich oder kontinuierlich zunimmt.

Die Erfindung verbindet die Vorteile der Rastertunnelmikroskopie (hohe laterale Auflösung bis in Bereiche unterhalb eines Nanometers, hoch fokussierte Injektion niederenergetischer Elektronen bei hohen Stromdichten, Untersuchung der obersten Atomlagen der Probe) mit den vielfältigen analytischen Möglichkeiten der Sekundärelektronen- bzw. Rasterelektronenmikroskopie (lokale Spektroskopie; Auswertung der Sekundärelektronen bezüglich ihrer Spinpolarisation, ihrer Energie; lokale Elektronenbeugungsexperimente).
Diese vorteilhafte Verbindung der Rastertunnelmikroskopie mit der Rasterelektronenmikroskopie wird durch die erfindungsgemäße elektrostatische Abschirmung der elektronenemittierenden Elektrode mittels abschirmender Dünnschichtelektroden ermöglicht.

Weiterhin soll im Rahmen dieser Erfindung unter Elektronenenergie die Energie der zu emittierenden Elektronen verstanden werden.

Besonders vorteilhafte Ausgestaltung der erfindungsgemäßen Punktquelle liegt vor, wenn der Bereich des geringsten Krümmungsradius der elektronenemittierenden Elektrode von zuerst einer elektrisch isolierenden und nachfolgend von einer elektrisch leitenden Schicht mit jeweils einer Schichtdicke von maximal 15 nm, vorteilhafterweise ≤ 10 nm, bedeckt ist und die Schichtdicke beider Schichten in allen Raumrichtungen von diesem Bereich weg, vorteilhafterweise kontinuierlich, zunimmt.

Im weiteren wird die Erfindung an mehreren Ausführungsbeispielen näher erläutert.

### Beispiel 1

Das eine Ende eines Stückes Wolframdraht (Länge etwa 1 cm, Durchmesser 0,4 mm) wird elektrochemisch geätzt, so dass eine kegelförmige Punktquelle mit einem Spitzenradius im unteren Nanometerbereich entsteht. Die eine Hälfte des Drahtstückes, die das geätzte Ende umfasst, wird mit Aluminiumoxid einer Dicke von 20 nm beschichtet. Der gleiche Bereich wird anschließend mit einer 10 nm dünnen Tantalschicht überzogen. Die Tantalschicht wird im mittleren Bereich des Drahtstückes durch nasschemisches Ätzen teilweise entfernt, damit ein elektrischer Kurzschluß zwischen dem Wolframdraht und der dünnen Metallschicht ausgeschlossen werden kann. Die beiden auf den Wolframdraht aufgebrachten dünnen Schichten werden im Bereich des größten Krümmungsradius der Punktquelle mit Nanometergenauigkeit entfernt.

Die Punktquelle wird auf gleiche Weise wie eine konventionelle STM-Spitze in eine Piezo-Rastervorrichtung eines Rastertunnelmikroskopes eingebaut. Sowohl der Wolfram-Kern als auch die Tantalschicht werden kontaktiert. An den Wolfram-Kern wird eine gegenüber der zu bestrahlenden Probe negative Spannung von 20 Volt angelegt, die Punktquelle wird dann so an die Probenoberfläche (nanostrukturierte Kobalt-Rechtecke auf einer Platinschicht) angenähert, dass ein Feldemissionsstrom von 10 nA fließt. Die Tantalschicht wird auf ein elektrisches Potential gebracht, welches gegenüber dem Wolfram-Kern positiv ist und welches damit den feldemittierenden Wolfram-Kern elektrostatisch abschirmt, so dass am Ort der Probe, an dem die feldemittierten Elektronen auftreffen und Sekundär- oder rückgestreute Elektronen austreten, kein oder ein wesentlich verringertes elektrisches Feld vorliegt. Diese Feldfreiheit ermöglicht es den Sekundär- oder rückgestreute Elektronen, den Bereich zwischen Punktquelle und Probe zu verlassen - diese Elektronen werden dann in makroskopischen Abständen mit einem konventionellen Sekundärelektronendetektor und einem Spindetektor analysiert.
Die Detektordaten werden zusammen mit den Koordinaten der Rasterbewegungen aufgezeichnet, daraus wird ein zweidimensionales Bild der abgerasterten Probenoberfläche gewonnen, welches die Sekundärelektronenemission und die Spinpolarisation mit einer räumlichen Auflösung im unteren Nanometerbereich darstellt.
Im Sekundärelektronenbild sind nanostrukturierte Kobalt-Rechtecke auf einer Platinschicht im Graustufenkontrast deutlich abgebildet. Das Spinpolarisationsbild zeigt ebenfalls als Graustufenkontrast magnetische Domänen innerhalb der Kobalt-Rechtecke.

### Beispiel 2

Das eine Ende eines Stückes Wolframdraht (Länge etwa 1 cm, Durchmesser 0,4 mm) wird elektrochemisch geätzt, so dass eine kegelförmige Punktquelle mit einem Spitzenradius im unteren Nanometerbereich entsteht. Die eine Hälfte des Drahtstückes, die das geätzte Ende umfasst, wird mit Aluminiumoxid beschichtet, im Bereich des geringsten Krümmungsradius mit einer Schichtdicke von 3 nm und in allen Raumrichtungen zunehmend bis auf eine Schichtdicke von 20 nm. Der Bereich des geringsten Krümmungsradius wird anschließend mit einer 2 nm dünnen Tantalschicht überzogen, und von dort ausgehend in allen Raumrichtungen die Schichtdicke der Tantalschicht auf 10 nm erhöht. Die Tantalschicht wird im mittleren Bereich des Drahtstückes durch nasschemisches Ätzen teilweise entfernt, damit ein elektrischer Kurzschluß zwischen dem Wolframdraht und der dünnen Metallschicht ausgeschlossen werden kann.

Die Punktquelle wird auf gleiche Weise wie eine konventionelle STM-Spitze in eine Piezo-Rastervorrichtung eines Rastertunnelmikroskopes eingebaut. Sowohl der Wolfram-Kern als auch die Tantalschicht werden kontaktiert. An den Wolfram-Kern wird eine gegenüber der zu bestrahlenden Probe negative Spannung von 10 Volt angelegt, die Punktquelle wird dann an die Probenoberfläche (nanostrukturierte Kobalt-Rechtecke auf einer Platinschicht) angenähert, und ein Feldemissionsstrom von 10 nA trotz der geschlossenen Aluminiumoxid- und Tantalschicht fließt. Die Tantalschicht wird auf ein elektrisches Potential gebracht, welches gegenüber dem Wolfram-Kern positiv ist und welches damit den feldemittierenden Wolfram-Kern elektrostatisch abschirmt, so dass am Ort der Probe, an dem die feldemittierten Elektronen auftreffen und Sekundär- oder rückgestreute Elektronen austreten, kein oder ein wesentlich verringertes elektrisches Feld vorliegt. Diese Feldfreiheit ermöglicht es den Sekundär- oder rückgestreute Elektronen, den Bereich zwischen Punktquelle und Probe zu verlassen - diese Elektronen werden dann in makroskopischen Abständen mit einem konventionellen Sekundärelektronendetektor und einem Spindetektor analysiert.
Die Detektordaten werden zusammen mit den Koordinaten der Rasterbewegungen aufgezeichnet, daraus wird ein zweidimensionales Bild der abgerasterten Probenoberfläche gewonnen, welches die Sekundärelektronenemission und die Spinpolarisation mit einer räumlichen Auflösung im unteren Nanometerbereich darstellt.
Im Sekundärelektronenbild sind nanostrukturierte Kobalt-Rechtecke auf einer Platinschicht im Graustufenkontrast deutlich abgebildet. Das Spinpolarisationsbild zeigt ebenfalls als Graustufenkontrast magnetische Domänen innerhalb der Kobalt-Rechtecke.

## Patentansprüche

1. Punktquelle für Elektronen-Feldemission, bei der die Mantelfläche der elektronenemittierenden Elektrode mindestens im Bereich der Spitze mit mindestens einer elektrisch isolierenden Schicht und darüber mit mindestens einer elektrisch leitfähigen Schicht versehen ist, wobei die Schichten im Bereich des geringsten Krümmungsradius der elektronenemittierenden Elektrode eine Unterbrechung aufweisen oder dieser Bereich von mindestens der elektrisch isolierenden Schicht bedeckt ist, wobei jede der abwechselnd elektrisch isolierenden und leitenden Schichten eine maximale Dicke von 15 nm in diesem Bereich aufweist und die maximale Dicke aller Schichten in diesem Bereich in Abhängigkeit von der jeweiligen Elektronenenergie eine Elektronenemission gewährleistet und weiterhin keine Verbindung zwischen der elektronenemittierenden Elektrode und der oder den elektrisch leitfähigen Schichten realisiert ist.

2. Punktquelle nach Anspruch 1, bei der die Schichten strukturierte Dünnschichten sind.

3. Punktquelle nach Anspruch 1, bei der die Schichtdicken zwischen 2 nm und 100 nm liegen.

4. Punktquelle nach Anspruch 1, bei der die elektrisch leitende Schicht auf dem gleichen elektrischen Potential wie die Probe liegt.

5. Punktquelle nach Anspruch 1, bei der alternierend auf der Mantelfläche der Punktquelle elektrisch isolierende und elektrisch leitfähige Schichten aufgebracht sind.

6. Punktquelle nach Anspruch 1, bei der das Material der äußersten elektrisch leitfähigen Schicht auf dem gleichen elektrischen Potential wie das des Probenmaterials liegt.

7. Punktquelle nach Anspruch 1, bei der mindestens eine der elektrisch leitfähigen Schichten auf einem negativen elektrischen Potential liegt, welches das negative Potential der elektronenemittierenden Elektrode übersteigt.

8. Punktquelle nach Anspruch 1, bei der mindestens eine der elektrisch leitfähigen Schichten aus einem Material mit einer höheren Austrittsarbeit als die der elektronenemittierenden Elektrode besteht.

9. Punktquelle nach Anspruch 1, bei der der Bereich des geringsten Krümmungsradius der elektronenemittierenden Elektrode eine laterale Ausdehnung von 1 Nanometer bis 10 µm aufweist.

10. Punktquelle nach Anspruch 5, bei der die gesamte Mantelfläche der elektronenemittierenden Elektrode mit den alternierenden elektrisch isolierenden und elektrisch leitfähigen Schichten bedeckt ist.

11. Punktquelle nach Anspruch 1, bei der durch die Wahl der elektrischen Potentiale der Schichten auf der Mantelfläche eine Fokussierung des emittierten Elektronenstrahles realisiert ist.

12. Punktquelle nach Anspruch 1, bei der einzelne, mehrere oder alle elektrisch isolierenden und elektrisch leitfähigen Schichten in Segmente unterteilt sind.

13. Punktquelle nach Anspruch 12, bei der die Größe der elektrischen Potentiale an den einzelnen Schichtsegmenten zur Einstellung und zur Variation des Elektronenemissionswinkels dienen.

14. Punktquelle nach Anspruch 13, bei der die Einstellung und Variation des Emissionswinkels innerhalb eines ein- oder zweidimensionalen Rasters realisiert ist.

15. Punktquelle nach Anspruch 1, bei der eine elektrisch leitfähige Schicht ein elektrisches Potential aufweist, mit dem eine Abstandsregelung zur Probe durch Auswertung des Tunnelstromes realisiert ist.

16. Punktquelle nach Anspruch 1, bei der mindestens eine der elektrisch leitfähigen Schichten als Detektor oder Kollektor für sekundäre Elektronen dient.

17. Punktquelle nach Anspruch 1, bei der die isolierenden Schichten aus Oxiden bestehen.

18. Punktquelle nach Anspruch 1, bei der die elektrisch leitfähigen Schichten aus Metallen bestehen.

19. Punktquelle nach Anspruch 1, bei der die elektronenemittierende Spitze möglichst kegelförmig ausgebildet ist oder eine Kohlenstoff-Nanoröhre ist.

20. Punktquelle nach Anspruch 1, bei der einzelne, mehrere oder alle elektrisch isolierenden und elektrisch leitfähigen Schichten im Bereich des geringsten Krümmungsradius der elektronenemittierenden Elektrode jeweils eine maximale Dicke von ≤ 10 nm aufweisen.

21. Punktquelle nach Anspruch 1, bei der einzelne, mehrere oder alle elektrisch isolierenden und elektrisch leitenden Schichten im Bereich des geringsten Krümmungsradius der elektronenemittierenden Elektrode im Zentrum des Bereiches mit dem geringsten Krümmungsradius eine minimale Schichtdicke aufweisen und die Schichtdicken dieser Schichten in einer oder mehreren Raumrichtungen diskontinuierlich oder kontinuierlich zunimmt.
